# EUROPÄISCHE PATENTSCHRIFT

(11) **EP 2 276 648 B1**
(45) Veröffentlichungstag und Bekanntmachung des Hinweises auf die Patenterteilung: **12.03.2014**
(21) Anmeldenummer: 09745498.7
(22) Anmeldetag: 28.04.2009
(51) Int. Cl.: B60N 2/22

(54) **FAHRZEUGSITZ MIT BESCHLÄGEN**
VEHICLE SEAT COMPRISING FIXTURES
SIEGE DE VEHICULE ET SES GARNITURES

(30) Priorität: 13.05.2008 DE 102008023943
(43) Veröffentlichungstag der Anmeldung: 26.01.2011
(73) Patentinhaber: KEIPER GmbH & Co. KG, 67657 Kaiserslautern (DE)
(72) Erfinder: NASSHAN, Jürgen, 67655 Kaiserslautern (DE); SCHEIB, Martin, 67744 Kappeln (DE); LENZ, Roman, 67655 Kaiserslautern (DE)
(74) Vertreter: Kalkoff & Partner
(86) Internationale Anmeldenummer: PCT/EP2009/003058
(87) Internationale Veröffentlichungsnummer: WO 2009/138164

(56) Entgegenhaltungen:
- WO-A1-2006/055616
- DE-C1- 3 706 394
- FR-A1- 2 753 935
- US-A- 6 149 235
- US-B1- 6 767 055

## Beschreibung

Die Erfindung betrifft einen Fahrzeugsitz, insbesondere Kraftfahrzeugsitz, mit Beschlägen gemäß dem Oberbegriff des Anspruches 1.

Aus der DE 101 05 282 A1 ist ein Beschlag für einen Fahrzeugsitz bekannt, mit einem ersten Beschlagteil, mit einem relativ zum ersten Beschlagteil verdrehbaren und verriegelbaren zweiten Beschlagteil und mit einem Ring, welcher die beiden Beschlagteile in axialer Richtung zusammenhält, wobei das erste Beschlagteil in den Ring eingepresst ist.

Die DE 44 36 101 A1 offenbart einen Getriebebeschlag mit einem sitzteilfesten Beschlagteil und einem der Lehne zugeordneten, schwenkbaren Beschlagteil, die über eine Schwenkachse miteinander verbunden sind. Die Schwenkachse weist einen Exzenterabschnitt auf, der aus zwei einen Mitnehmer der Schwenkachse umfassenden Keilsegmenten, einem zwischen deren Schmalseiten fassenden Mitnehmerarm, einem deren Breitseiten auseinanderdrückenden Kraftspeicher sowie gegebenenfalls einem nebengeordneten Zentriersegment gebildet ist.

Die WO 00/44582 A1 offenbart einen Rastbeschlag mit einem ersten Beschlagteil, einem mittels des ersten Beschlagteils gelagerten zweiten Beschlagteil und wenigstens einem zwischen dem ersten und zweiten Beschlagteil in einer Führung geführten Riegel, wobei die Führung gleichzeitig ein Lager zur Lagerung von erstem Beschlagteil und zweitem Beschlagteil bildet.

Aus der US 6,767,055 B1 ist eine Lehnenstruktur bekannt, die aus einzelnen, durch Vierkantrohre gebildeten streben besteht, wobei auf jeder Seite der Lehne die Streben durch eine Verstärkungsplatte über nahezu die gesamte Höhe miteinander verbunden sind. Auf der von den Verstärkungsplatten abgewandten Seite der Streben ist überbrückend ein Blech angebracht, welches der Anbringung einer Armlehne dient.

Weiterhin sind aus der US 6,149,235 A ein Beschlagteil und aus den Druckschriften FR 2 753 935 A1 und WO 2006/055616 A1 jeweils eine Lehnenstruktur gemäß dem Oberbegriff des unabhängigen Anspruchs 1 bekannt.

Der Erfindung liegt die Aufgabe zu Grunde, einen Fahrzeugsitz mit Beschlägen der eingangs genannten Art zu verbessern, insbesondere die Steifigkeit zu erhöhen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die Verwendung eines Fahrzeugsitzes, insbesondere eines Kraftfahrzeugsitzes, mit Beschlägen, aufweisend ein erstes Beschlagteil und ein zweites Beschlagteil, und einer Lehnenstruktur mit Seitenwangen und mindestens einem die Seitenwangen verbindenden Holm, wobei die Seitenwangen der Lehnenstruktur durch offene Profile gebildet sind, und das offene Profil der Seitenwangen in einem mittleren Bereich durch eine Querverbindung geschlossen ist, ermöglicht eine Optimierung der Biegesteifigkeit der Lehne. Die Querverbindung ist bevorzugt an die entsprechende Seitenwange angeschweißt. Die Querverbindung erhöht zudem die Torsionssteifigkeit der Seitenwange, welche im Falle einer Krafteinleitung über eine Kopfstütze relevant ist. Die Querverbindung stellt zudem sicher, dass im Falle eines Seitenaufpralls die Rippen des Insassen nicht ins Innere des durch die Seitenwangen gebildeten, nach innen offenen C-Profils gelangen, so dass der Insasse auch im Falle eines Seitenaufpralls geschützt ist.

Insbesondere können dabei erste Beschlagteil ohne ersten Adapter direkt mit dem Sitzteil und/oder das zweite Beschlagteil ohne zweiten Adapter direkt mit der Lehnenstruktur verbunden sein.

Insbesondere bevorzugt ist - ohne Berücksichtigung von insbesondere verbindungstechnisch bedingten Querverbindung im Bereich der Anbringung von kopfstützenseitigen und/oder sitzseitigen Holmen zwischen den Seitenwangen - ausschließlich eine Querverbindung vorgesehen, d.h. abgesehen von ggf. vorhandenen endseitigen Querverbindungen und besagter einer im mittleren Bereich vorgesehenen Querverbindung ist das Profil offen ausgebildet.

Erfindungsgemäß weisen die Seitenwangen entlang ihrer Längsrichtung beidseitig einen zweifach um 90° gebogenen Randbereich sowie mindestens einen Durchbruch, insbesondere bevorzugt eine Reihe von mehreren Durchbrüchen, im mittleren Bereich entlang der Mittellängslinie der Seitenwangen auf. Der zweifach umgebogene Randbereich ermöglicht eine einfache Anbringung der Querverbindung, insbesondere mittels Schweißens. Durch das Vorsehen mindestens eines, bevorzugt mehrerer Durchbrüche entlang der Mittellängslinie der Seitenwangen lässt sich Material und Gewicht einsparen, wobei die durch die Materialersparnis verringerte Biegesteifigkeit durch die Querverbindung ausgleichbar ist. Insbesondere durch das Zusammenspiel von Durchbrüchen und Querverbindung lässt sich über die Lehnenhöhe eine in jedem Bereich optimierte Biegesteifigkeit der Lehne erzielen. Auch die Torsionssteifigkeit kann durch diese Maßnahmen optimiert werden.

Bei der Querverbindung handelt es sich dabei um ein Stanz-Biegeteil aus Blech, welches mindestens eine Sicke, insbesondere bevorzugt genau eine Sicke, und ein oder mehrere, insbesondere zwei, sich seitlich nach außen erstreckende flügelartige Bereiche aufweist. Die Sicke gibt dem Blech auch bei geringen Blechstärken eine ausreichende Biegesteifigkeit, so dass die zu erwartenden Belastungen gut aufgenommen werden können. Die Sicke der Querverbindung verläuft bevorzugt im Mittel senkrecht zu und/oder in Bezug auf mindestens eine der vorderen und hinteren Seitenflächen der Seitenwangen.

Vorzugsweise sind die Seitenwangen am sitzseitigen Ende über einen sitzseitigen und/oder einen kopflehnenseitigen Holm miteinander verbunden, wobei der Holm durch ein Stanz-Biegeteil gebildet ist. Die Holme sind besonders bevorzugt mit den Seitenwangen mittels Schweißverbindungen fest verbunden, jedoch sind auch andere Verbindungen, wie beispielsweise Niet-, Schraub-, Steck- oder Clipsverbindungen denkbar.

Die Seitenwangen können mit den Beschlägen über Adapter verbunden sein, wobei der Adapter einen kreisförmigen Durchbruch und entlang beiden Längsseiten einen umgebogenen Rand aufweist. Der umgebogene Rand erhöht die Biegesteifigkeit und stellt sicher, dass der Adapter auch bereits vor der Anbringung an den Seitenwangen nicht verbogen wird und eine flächige Anlage gewährleistet werden kann. Die Verbindung erfolgt bevorzugt mittels einer Schweißverbindung, insbesondere mittels einzelner Schweißpunkte oder Schweißraupen, besonders bevorzugt mittels CMT(cold metal transfer)-Schweißens geschweißt. Natürlich ist auch eine direkte Anbringung ohne Adapter möglich.

Der Adapter weist vorzugsweise einen zweiten Durchbruch oder einen Ausschnitt auf, welcher zwischen den umgebogenen Rändern verlaufend ausgebildet ist. Durch diesen Durchbruch bzw. Ausschnitt kann zum Einen Material eingespart werden. Zum Anderen kann durch die Gestalt des Durchbruchs bzw. Ausschnitts Einfluss auf die Biegesteifigkeit genommen werden. Auch erhöhen die entsprechend ausgebildeten Adapter die Torsionssteifigkeit der Seitenwangen im unteren Bereich, so dass die Verformung der Lehnenstruktur insgesamt verringert werden kann, insbesondere bevorzugt ohne dass das Gewicht derselben erhöht werden muss.

Sind sowohl Querverbindungen als auch entsprechend ausgebildete Adapter an den Seitenwangen vorgesehen, so lässt sich der Steifigkeitsverlauf in Bezug auf eine Torsionsbelastung und eine Biegebelastung optimieren, insbesondere lässt sich ein möglichst harmonischer Verlauf der Steifigkeit realisieren. Der Steifigkeitsverlauf weist hierbei bevorzugt keinen Steifigkeitssprung auf, d.h. er ist stetig. Insbesondere bevorzugt ist ein parabelförmiger Steifigkeitsverlauf vorgesehen.

Der zweite Durchbruch ist besonders bevorzugt annähernd rechteckförmig ausgebildet, wobei die Eckbereiche abgerundet sind, jedoch kann die Gestalt auch am Ende offen ausgebildet sein, so dass sich eine Art Gabel ergibt.

Die Erfindung ist beispielsweise bei lähgseinstellbaren Fahrzeugsitzen von zweitürigen Kraftfahrzeugen mit zentrischem Freischwenken der Lehne einsetzbar, kann aber auch für andere Fahrzeugsitze verwendet werden. Die Art der Beschläge ist nicht speziell beschränkt, so können Rastbeschläge oder beliebige andere Beschläge vorgesehen sein.

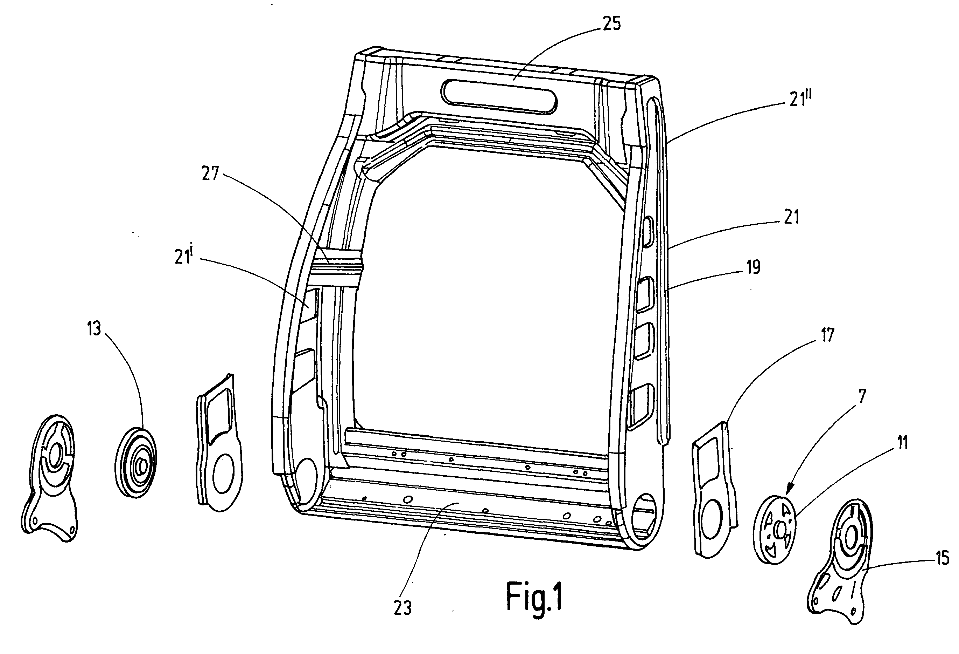

Im Folgenden ist die Erfindung anhand zweier in der Zeichnung dargestellter Ausführungsbeispiele näher erläutert. Es zeigen
- Fig. 1: eine Explosionsdarstellung des ersten Ausführungsbeispiels,
- Fig. 2: eine Seitenansicht eines Fahrzeugsitzes,
- Fig. 3: eine perspektivische Ansicht der Lehnenstruktur mit Beschlag,
- Fig. 4: eine Frontansicht der Lehnenstruktur mit Beschlag von Fig. 3,
- Fig. 5: eine Seitenansicht des Beschlagoberteils von Fig. 1,
- Fig. 6: eine Detailansicht einer Querversteifung,
- Fig. 7: eine Detailansicht einer oberen Ecke der Lehnenstruktur,
- Fig. 8: eine Detailansicht einer unteren Ecke der Lehnenstruktur,
- Fig. 9: eine Explosionsdarstellung des zweiten Ausführungsbeispiels,
- Fig. 10: eine Seitenansicht des Beschlagoberteils von Fig. 9, und
- Fig. 11: einen Schnitt durch einen Holm der Lehnenstruktur.

Gemäß dem ersten Ausführungsbeispiel weist ein Fahrzeugsitz 1 ein Sitzteil 3 und eine Lehne 5 auf, die relativ zum Sitzteil 3 um eine horizontale, durch zwei Beschläge 7 verlaufende Schwenkachse verschwenkbar ist. Auf der Außenseite eines der Beschläge 7 ist ein Handrad 9 angeordnet, welches der Neigungseinstellung der Lehne 5 dient. Ferner ist für eine Freischwenkfunktion ein Handhebel vorgesehen, der jedoch nicht dargestellt ist.

Jeder Beschlag 7 umfasst als Herz ein erstes Beschlagteil 11 und ein zweites Beschlagteil 13, welche in baulicher Hinsicht zusammen mit einem Umklammerungsring eine scheibenförmige Einheit bilden, wie sie beispielsweise in der DE 101 05 282 A1 beschrieben ist, deren Offenbarungsgehalt ausdrücklich einbezogen wird. Die beiden Beschlagteile 11 und 13 wirken als Getriebebeschlag oder als Rastbeschlag zusammen.

Am ersten Beschlagteil 11 ist ein erster Adapter 15, und am zweiten Beschlagteil 13 ist ein zweiter Adapter 17 mittels Schweißverbindungen fest angebracht. Über besagten ersten Adapter 15 ist das erste Beschlagteil 11 mit der Struktur (nicht dargestellt) des Sitzteils 3 verbunden, und über besagten zweiten Adapter 17 ist das zweite Beschlagteil 13 mit der Lehnenstruktur 19 verbunden.

Der zweite Adapter 17 ist als Stanz-Biegeteil aus Blech ausgebildet, wobei das Blech eine konstante Blechdicke aufweist. Die Lehnenstruktur 19 ist aus einer Mehrzahl einzelner Stanz-Biegeteile gebildet, wobei die einzelnen Teile miteinander im Wesentlichen zu einem Rahmen verschweißt sind. Auf Grund des - abgesehen vom Handrad 9, welches nur auf einer Seite des Fahrzeugsitzes 1 angeordnet ist - spiegelbildlichen Aufbaus wird im Folgenden nur auf eine Seite der Lehnenstruktur 19 und einen der hieran mittels Schweißverbindungen angebrachten zweiten Adapter 17 samt Beschlag 7 Bezug genommen.

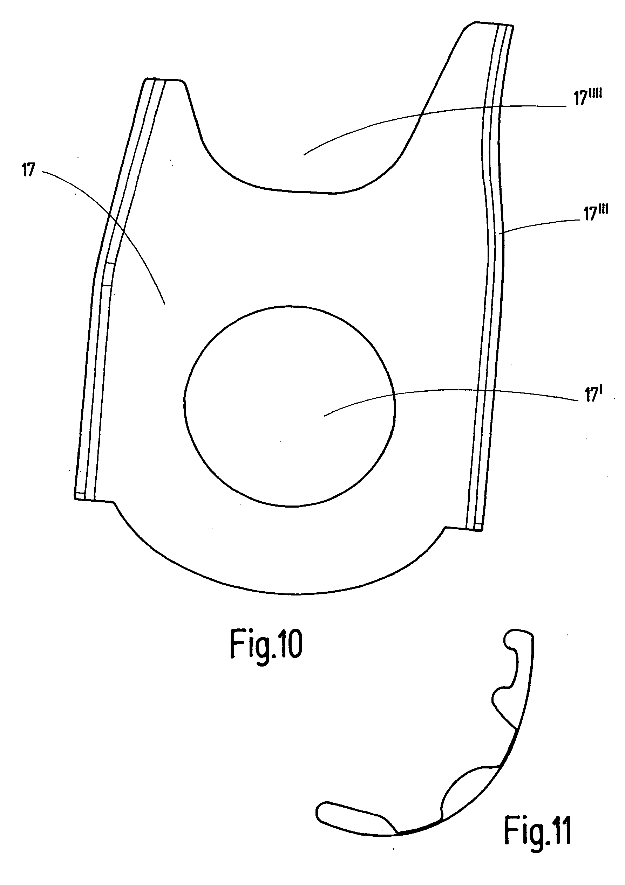

Die Lehnenstruktur 19 weist im Wesentlichen vier in rechten Winkeln miteinander verbundene, zu offenen Profilen gebogene Bereiche auf, nämlich zwei Seitenwangen 21, einen sitzseitigen Holm 23 und einen kopfstützenseitigen Holm 25. Insbesondere die Seitenwangen 21 und der sitzseitige Holm 23 sind derart C-förmig gebogen oder gerollt, dass die offene Seite nach innen gewandt ist. Ein Beispiel eines derartigen Holms 23, wie im vorliegenden Ausführungsbeispiel verwendet, ist in Fig. 11 im Schnitt dargestellt.

Bei den Seitenwangen 21 ist auf der Innenseite ein kleiner Randbereich nach innen gebogen, wobei die beiden Randbereiche miteinander fluchten. Ferner sind in den Seitenwangen 21 mehrere Durchbrüche 21' vorgesehen, welche insbesondere der Material- und Gewichtseinsparung dienen, zudem den Seitenwangen 21 eine definierte Steifigkeit geben. Entlang den außenseitigen Rändern verläuft eine nach außen gebogene Sicke 21" auf einer Seite von unten nach oben und entlang des oberen Endes der Seitenwangen 21 am anderen Rand wieder nach unten.

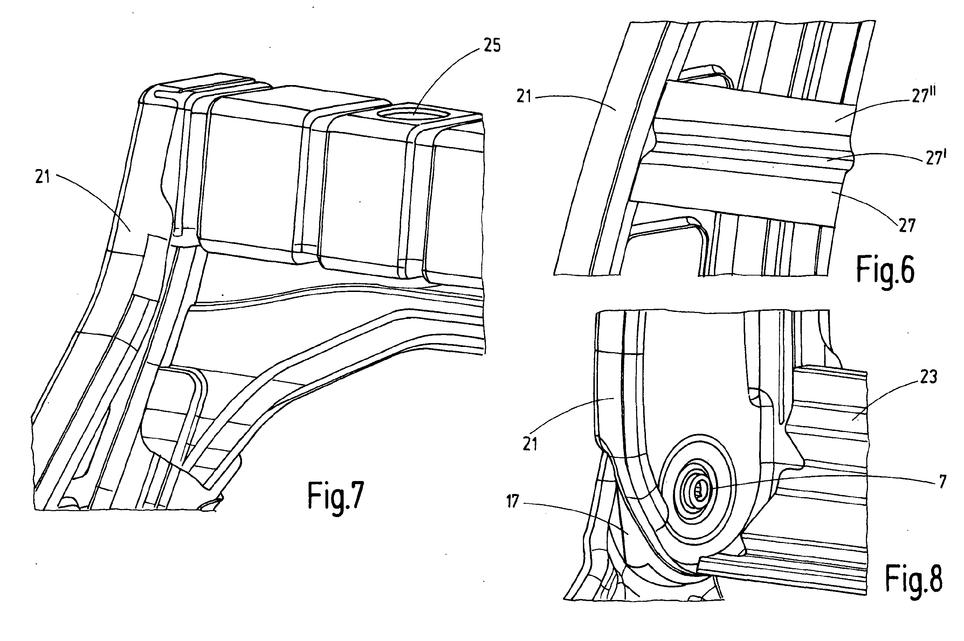

In Längsrichtung etwa in der Mitte der Seitenwangen 21 ist eine Querverbindung 27 zwischen den beiden Seitenwänden an den nach innen gebogenen Randbereichen des C-förmigen Profils angeschweißt. Die Querverbindung 27 ist vorliegend durch ein mit einer abgerundet V-förmigen Sicke 27' (siehe Fig. 6) gebogenes im Wesentlichen rechteckförmiges Stanz-Biegeteil aus Blech konstanter Dicke gebildet, wobei die Sicke 27' in Richtung Zentrum der Lehnenstruktur 19 gerichtet ist, also weg von der entsprechenden Seitenwange 21. Rechts und links der Sicke 27' erstrecken sich flügelartige Randbereiche 27", welche für eine sichere Schweißverbindung zwischen Seitenwange 21 und Querverbindung 27 sorgen. Der Längsverlauf der Sicke 27' ist im Wesentlichen senkrecht zu den beiden einander gegenüberliegenden Außenflächen des die Seitenwange 21 bildenden C-Profils gerichtet. Ferner ist die Querverbindung 27 vorliegend in gleicher Höhe wie einer der Durchbrüche 21' in der Seitenwange 21 angeordnet.

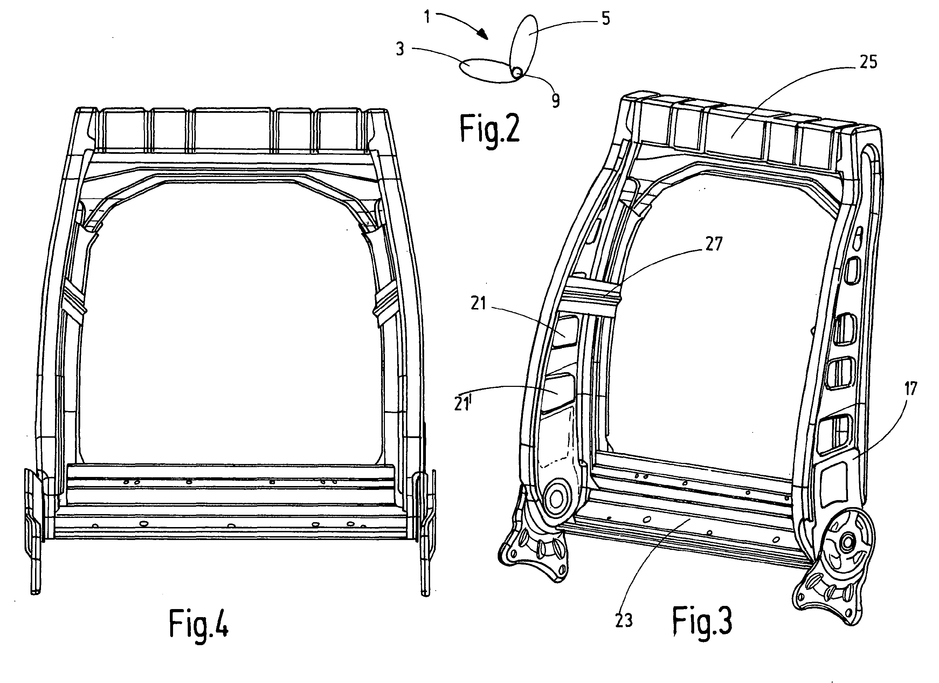

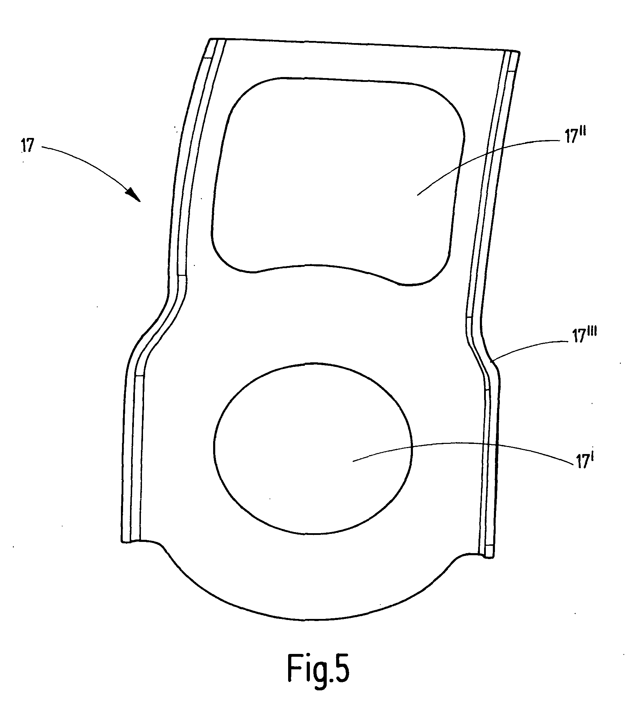

Im unteren Bereich der Seitenwange 21 ist jeweils der zweite Adapter 17 des entsprechenden Beschlags 7 von außen her angeschweißt, wobei er zwischen sich gegenüberliegenden Sicken 21" angeordnet ist (siehe Fig. 3). Der zweite Adapter 17 ist durch ein Stanz-Biegeteil aus einem Blech konstanter Dicke gebildet, welches einen ersten Durchbruch 17' mit kreisförmigem Querschnitt für den Beschlag 7 und einen zweiten Durchbruch 17" mit abgerundet rechteckförmigem Querschnitt im Bereich der Anbringung an der Seitenwange 21 sowie zwei an den Längsseiten zweifach umgebogene Ränder 17"' aufweist, welche bei der Anbringung an der Seitenwange 21 nach außen weisen. Die Breite des zweiten Adapters 17 verringert sich etwas zwischen dem Bereich, in welchem der erste Durchbruch 17' und dem Bereich in welchem der zweite Durchbruch 17" angeordnet ist, wobei sich um den ersten Durchbruch 17' eine annähernd kreisringförmige Fläche mit einer Breite ergibt. Im Bereich um den zweiten Durchbruch 17" ist ebenfalls eine Fläche annähernd konstanter Breite vorgesehen, wobei die Breite (ohne Berücksichtigung des doppelt umgebogenen Randes 17"' etwa halb so groß wie die Breite der kreisringförmigen Fläche ist (siehe Fig. 5).

Der sitzseitige Holm 23 ist durch ein rechteckförmiges Blech, welches mit einer Mehrzahl von Knicken in Längsrichtung versehen ist, gebildet, wobei es einen annähernd bogenförmigen Verlauf aufweist (siehe Fig. 8). Es ist endseitig im unteren Bereich der Seitenwangen 21 mit einem in Richtung der jeweils anderen Seitenwange ragenden Randbereich derselben verschweißt, d.h. in diesem Bereich ist der Rand der Seitenwangen 21 nicht nochmals nach innen gebogen, wie im mittleren Bereich der Seitenwangen, in welchem die Querverbindung 27 vorgesehen ist.

Der kopfstützenseitige Holm 25 ist ebenfalls durch ein Stanz-Biegeteil gebildet, welches mit vorstehenden Bereichen der Seitenwangen 21 verschweißt ist. Im Holm 25 sind u.a. Öffnungen für die Durchführung von Kopfstützenschenkeln vorgesehen. Ferner sind vorliegend quer zur Längsrichtung verlaufende Sicken vorgesehen.

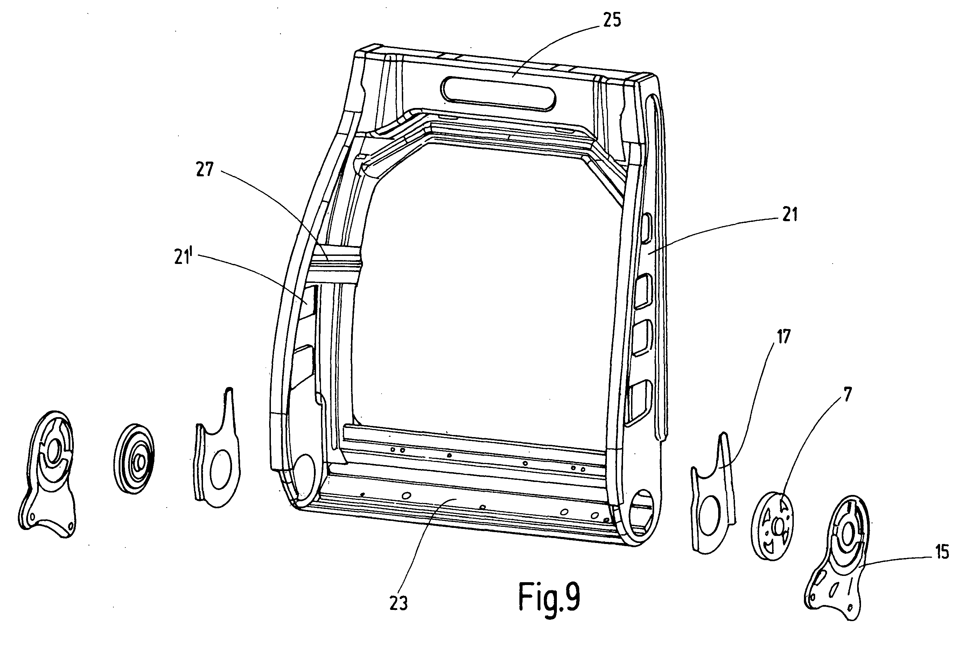

Gemäß dem zweiten in den Figuren 9 und 10 dargestellten Ausführungsbeispiel, welches dem ersten Ausführungsbeispiel - sofern nachfolgend nicht ausdrücklich erwähnt - entspricht, sind gleiche oder gleichwirkende Elemente mit den gleichen Bezugszeichen versehen. Einziger Unterschied zum ersten Ausführungsbeispiel ist der zweite Adapter 17, welcher an Stelle des zweiten Durchbruchs 17" einen vorliegend gabelartigen Ausschnitt 17"" aufweist, d.h. der zweite Durchbruch ist am oberen, kopfstützenseitigen Ende des Adapters 17 offen ausgebildet. Die beiden Zinken weisen unterschiedliche Längen auf, wobei der auf der Rückseite der Lehne angeordnete Zinken länger als der auf der Vorderseite angeordnete Zinken ist. Beiden einander gegenüberliegenden Längsseiten des zweiten Adapters 17 sind wiederum mit einem doppelt umgebogenen Rand 17"' versehen.

Ferner unterscheidet sich vorliegend die Ausgestaltung des kopfstützenseitigen Holms 25, welcher ebenfalls durch ein Stanz-Biegeteil aus Blech gebildet ist, von dem des ersten Ausfiihrungsbeispiels, wobei im Holm die quer verlaufenden Sicken entfallen und eine in Längsrichtung verlaufende Öffnung vorgesehen ist.

Gemäß einem weiteren, nicht in der Zeichnung dargestellten, dritten Ausführungsbeispiel sind das erste Beschlagteil ohne ersten Adapter direkt mit dem Sitzteil und das zweite Beschlagteil ohne zweiten Adapter direkt mit der Lehnenstruktur verbunden. Ansonsten entspricht die Ausgestaltung derjenigen des ersten Ausführungsbeispiels. Auch in diesem Fall sind die Seitenwangen und Holme profiliert ausgebildet, und ferner sind Querverbindungen an den Seitenwangen vorgesehen, so dass sich der Steifigkeitsverlauf in Bezug auf eine Torsionsbelastung und eine Biegebelastung optimieren lässt, insbesondere lässt sich ein möglichst harmonischer Verlauf der Steifigkeit realisieren. Der Steifigkeitsverlauf weist hierbei bevorzugt keinen Steifigkeitssprung auf, d.h. er ist stetig. Insbesondere bevorzugt ist ein parabelförmiger Steifigkeitsverlauf vorgesehen.

In Abwandlung zum dritten Ausführungsbeispiel ist auch eine Kombination von direkter Anbringung des ersten Beschlagteils am Sitzteil und Anbringung des zweiten Beschlagteils mittels eines Adapters an der Lehnenstruktur oder von Anbringung des ersten Beschlagteils mittels eines Adapters am Sitzteil und direkter Anbringung des zweiten Beschlagteils an der Lehnenstruktur möglich.

### Bezugszeichenliste

- 1: Fahrzeugsitz
- 3: Sitzteil
- 5: Lehne
- 7: Beschlag
- 9: Handrad
- 11: erstes Beschlagteil
- 13: zweites Beschlagteil
- 15: erster Adapter
- 17: zweiter Adapter
- 17': erster Durchbruch
- 17": zweiter Durchbruch
- 17"': Rand
- 17"": Ausschnitt
- 19: Lehnenstruktur
- 21: Seitenwange
- 21': Durchbruch
- 21": Sicke (Seitenwange)
- 23: sitzseitiger Holm
- 25: kopfstützenseitiger Holm
- 27: Querverbindung
- 27': Sicke (Querverbindung)
- 27": flügelartiger Randbereich

## Patentansprüche

1. Fahrzeugsitz, insbesondere für einen Kraftfahrzeugsitz, mit Beschlägen (7), aufweisend ein erstes Beschlagteil (11) und ein zweites Beschlagteil (13), und einer Lehnenstruktur (19) mit Seitenwangen (21) und mindestens einem die Seitenwangen (21) verbindenden Holm (23, 25),
wobei das erste Beschlagteil (11) mit einem Sitzteil (3) des Fahrzeugsitzes (1) fest verbunden ist, insbesondere mittels eines Adapters (15), und das zweite Beschlagteil (13) für die Neigungseinstellung einer Lehne (3) des Fahrzeugsitzes (1) zwischen mehreren Gebrauchsstellungen relativ zum ersten Beschlagteil (11) verdrehbar ist, und die Lehnenstruktur (19) mit dem zweiten Beschlagteil (13) fest verbunden ist, insbesondere über einen zweiten Adapter (17), und die Seitenwangen (21) der Lehnenstruktur (19) durch offene Profile gebildet sind, wobei das offene Profil in einem mittleren Bereich der Seitenwangen (21) durch mindestens eine Querverbindung (27) geschlossen ist, welche fest mit den Seitenwangen (21) verbunden ist,
wobei die Seitenwangen (21) entlang ihrer Längsrichtung beidseitig einen zweifach um 90° gebogenen Randbereich sowie mindestens einen Durchbruch (21') im mittleren Bereich entlang der Mittellängslinie aufweisen und **dadurch gekennzeichnet, dass**
die Querverbindung (27) ein Stanz-Biegeteil aus Blech ist, welches mindestens eine sich in Längsrichtung des Teils erstreckende Sicke (27') und zwei sich seitlich von der Sicke (27') nach aussen erstreckende flügelartige Bereiche (27") aufweist.

2. Fahrzeugsitz nach Anspruch 1, **dadurch gekennzeichnet, dass** die Seitenwangen (21) zwei parallel zum Randbereich verlaufende Sicken (21") aufweisen, welche sich nach außen, weg von der Querverbindung (27) erstreckt.

3. Fahrzeugsitz nach Anspruch 1, **dadurch gekennzeichnet, dass** die Sicke (27') der Querverbindung (27) im Mittel senkrecht zu und/oder in Bezug auf mindestens eine der vorderen und hinteren Seitenflächen der Seitenwangen (21) angeordnet ist.

4. Fahrzeugsitz nach einem der vorhergehenden Ansprüche, **dadurch gekennzeichnet, dass** die Seitenwangen (21) am kopfstützenseitigen Ende über einen kopfstützenseitigen Holm (25) miteinander verbunden sind, wobei der Holm (25) durch ein Stanz-Biegeteil gebildet ist.

5. Fahrzeugsitz nach einem der vorhergehenden Ansprüche, **dadurch gekennzeichnet, dass** die Seitenwangen (21) am sitzseitigen Ende über einen sitzseitigen Holm (23) miteinander verbunden sind, wobei der Holm (23) durch ein Rollformteil gebildet ist.

6. Fahrzeugsitz nach einem der vorhergehenden Ansprüche, **dadurch gekennzeichnet, dass** die Seitenwangen (21) mit den Beschlägen (7) über Adapter (17) verbunden sind, wobei der Adapter (17) einen kreisförmigen Durchbruch (17') und entlang beiden Längsseiten einen umgebogenen Rand (17"') aufweist.

7. Fahrzeugsitz nach Anspruch 6, **dadurch gekennzeichnet, dass** der Adapter (17) einen zweiten Durchbruch (17") oder einen Ausschnitt (17"") aufweist, welcher zwischen den umgebogenen Rändern (17"') verlaufend ausgebildet ist.

8. Fahrzeugsitz nach Anspruch 7, **dadurch gekennzeichnet, dass** der zweite Durchbruch (17") annähernd rechteckförmig ausgebildet ist.

9. Fahrzeugsitz nach einem der vorhergehenden Ansprüche, **dadurch gekennzeichnet, dass** der Steifigkeitsverlauf stetig ist.

10. Fahrzeugsitz nach Anspruch 9, **dadurch gekennzeichnet, dass** der Steifigkeitsverlauf parabelförmig ist.

11. Fahrzeugsitz nach einem der vorhergehenden Ansprüche, **dadurch gekennzeichnet, dass** die die Seitenwangen (21) der Lehnenstruktur (19) durch in Richtung der Mittelebene des Fahrzeugsitzes offene, C-förmige Profile gebildet sind, wobei im mittleren Bereich der Seitenwangen (21) die Querverbindung (27) die freien Endbereiche der Schenkel des jeweiligen C-förmigen Profils verbinden.

## Claims

1. A vehicle seat, in particular for a motor vehicle seat, comprising fixtures (7), having a first fixture part (11) and a second fixture part (13), and a backrest structure (19) having lateral cheeks (21) and at least one bar (23, 25) connecting the lateral cheeks (21),
the first fixture part (11) being fixedly connected to a seat part (3) of the vehicle seat (1), in particular by means of an adapter (15) and the second fixture part (13) being able to be rotated for adjusting the inclination of a backrest (3) of the vehicle seat (1) between a plurality of positions of use relative to the first fixture part (11) and the backrest structure (19) being fixedly connected to the second fixture part (13), in particular via a second adapter (17), and wherein the lateral cheeks (21) of the backrest structure (19) are formed by open profiles, the open profile being closed in a central region of the lateral cheeks (21) by at least one crossbar (27) which is fixedly connected to the lateral cheeks (21),
wherein the lateral cheeks (21) in their longitudinal direction on both sides have an edge region bent back twice by 90° as well as at least one through-hole (21') in the central region along the central longitudinal line, and **characterized in that**
the crossbar (27) is a stamped-bent part made of sheet metal, which comprises at least one bead (27') extending in the longitudinal direction of the part and two wing-like regions (27") extending outwardly to the side of the bead (27').

2. The vehicle seat according to claim 1, **characterized in that** the lateral cheeks (21) comprise two beads (21") extending parallel to the edge region, which extend outwardly away from the crossbar (27).

3. The vehicle seat according to claim 1, **characterized in that** the bead (27') of the crossbar (27) is arranged in the center perpendicular to and/or relative to at least one of the front and rear side surfaces of the lateral cheeks (21).

4. The vehicle seat according to one of the preceding claims, **characterized in that** the lateral cheeks (21) at the end on the headrest side are connected to one another via a bar (25) on the headrest side, the bar (25) being formed by a stamped-bent part.

5. The vehicle seat according to one of the preceding claims, **characterized in that** the lateral cheeks (21) at the end on the seat side are connected to one another via a bar (23) on the seat side, the bar (23) being formed by a rolled and formed part.

6. The vehicle seat according to one of the preceding claims, **characterized in that** the lateral cheeks (21) are connected to the fixtures (7) via an adapter (17), the adapter (17) having a circular through-hole (17') and a bent-back edge (17"') along both longitudinal sides.

7. The vehicle seat according to claim 6, **characterized in that** the adapter (17) has a second through-hole (17") or a cutout (17"") which is configured to extend between the bent-back edges (17"').

8. The vehicle seat according to claim 7, **characterized in that** the second through-hole (17") is of approximately rectangular configuration.

9. The vehicle seat according to one of the preceding claims, **characterized in that** the stiffness distribution is constant.

10. The vehicle seat according to claim 9, **characterized in that** the stiffness distribution is parabolic.

11. The vehicle seat according to one of the preceding claims, **characterized in that** the lateral cheeks (21) of the backrest structure (19) are formed by C-shaped profiles which are open in the direction of the central plane of the vehicle seat, the crossbar (27) connecting the free end regions of the limbs of the respective C-shaped profile in the central region of the lateral cheeks (21).

## Revendications

1. Siège de véhicule, en particulier pour un siège de véhicule automobile, avec des garnitures (7), comportant une première garniture (11) et une deuxième garniture (13), et une structure de dossier (19) avec des joues latérales (21) et au moins une barre (23, 25) reliant les joues latérales (21),
dans lequel la première garniture (11) est reliée fixement à une partie de siège (3) du siège de véhicule (1), en particulier au moyen d'un adaptateur (15), et la deuxième garniture (13) peut être tournée entre plusieurs positions d'utilisation, par rapport à la première garniture (11), pour le réglage de l'inclinaison d'un dossier (3) du siège de véhicule (1), et la structure de dossier (19) est reliée fixement à la deuxième garniture (13), en particulier par un deuxième adaptateur (17), et les joues latérales (21) de la structure de dossier (19) sont formées par des profilés ouverts, dans lequel le profilé ouvert est fermé dans une région centrale des joues latérales (21) par au moins une traverse (27), laquelle étant reliée fixement aux joues latérales (21),
dans lequel les joues latérales (21) présentent une région de bord coudée deux fois de 90° des deux côtés le long de leur direction longitudinale, ainsi qu'au moins une brèche (21') dans la région centrale le long de la ligne médiane longitudinale,
et **caractérisé en ce que**
la traverse (27) est une pièce de tôle estampée et cintrée, comportant au moins une nervure (27') s'étendant dans le sens longitudinal de la pièce, ainsi que deux régions du genre ailes (27") s'étendant vers l'extérieur sur le côté de la nervure (27').

2. Siège de véhicule selon la revendication 1, **caractérisé en ce que** les joues latérales (21) comportent deux nervures (21") s'étendant parallèlement à la région de bord et s'étendant vers l'extérieur, à distance de la traverse (27).

3. Siège de véhicule selon la revendication 1, **caractérisé en ce que** la nervure (27') de la traverse (27) est agencée en moyenne perpendiculairement à et/ou par rapport à au moins l'une parmi les surfaces latérales avant et arrière des joues latérales (21).

4. Siège de véhicule selon l'une des revendications précédentes, **caractérisé en ce que** les joues latérales (21) sont reliées entre elles à l'extrémité située côté appui-tête, par une barre (25) située côté appui-tête, la barre (25) étant formée par une pièce estampée et cintrée.

5. Siège de véhicule selon l'une des revendications précédentes, **caractérisé en ce que** les joues latérales (21) sont reliées entre elles à l'extrémité située du côté du siège, par un barre (23) située côté siège, la barre (23) étant formée par une pièce moulée par roulage.

6. Siège de véhicule selon l'une des revendications précédentes, **caractérisé en ce que** les joues latérales (21) sont reliées aux garnitures (7) par un adaptateur (17), l'adaptateur (17) comportant une brèche circulaire (17') et un bord replié (17"') le long de ses côtés longitudinaux.

7. Siège de véhicule selon la revendication 6, **caractérisé en ce que** l'adaptateur (17) comporte une deuxième brèche (17") ou un découpage (17"") formé de manière à s'étendre entre les bords repliés (17"').

8. Siège de véhicule selon la revendication 7, **caractérisé en ce que** la deuxième brèche (17") présente une forme quasiment rectangulaire.

9. Siège de véhicule selon l'une des revendications précédentes, **caractérisé en ce que** la ligne de rigidité est constante.

10. Siège de véhicule selon la revendication 9, **caractérisé en ce que** la ligne de rigidité présente une forme en parabole.

11. Siège de véhicule selon l'une des revendications précédentes, **caractérisé en ce que** les joues latérales (21) de la structure de dossier (19) sont formées par des profilés en forme de C, ouverts en direction du plan médian du siège de véhicule, dans lequel la traverse (27) relie les zones d'extrémité libres des jambes de chacun des profilés en forme de C, dans la région médiane des joues latérales (21).
